# EUROPÄISCHE PATENTSCHRIFT

(11) **EP 1 426 636 B1**
(45) Veröffentlichungstag und Bekanntmachung des Hinweises auf die Patenterteilung: **21.12.2005**
(21) Anmeldenummer: 03104541.2
(22) Anmeldetag: 04.12.2003
(51) Int. Cl.: F16B 37/08

(54) **Schnellmontagemutter**
Quick mounting nut
Ecrou de support rapide

(30) Priorität: 05.12.2002 DE 10256862
(43) Veröffentlichungstag der Anmeldung: 09.06.2004
(73) Patentinhaber: HILTI Aktiengesellschaft, 9494 Schaan (LI)
(72) Erfinder: Unverzagt, Stefan, 86929, Penzing (DE); Herb, Armin, 86974, Apfeldorf (DE); Hoffmann, Armin, 86899, Landsberg (DE)
(74) Vertreter: Wildi, Roland

(56) Entgegenhaltungen:
- US-A- 6 062 784
- US-A1- 2002 098 057

## Beschreibung

### Technisches Gebiet

Die Erfindung betrifft eine Schnellmontagemutter, die zumindest teilweise drehbewegungsfrei axial zu einem Gewindebolzen beweglich ist, mit einem, teilweise in zumindest einen Gewindegang eingreifenden, federndem Halteelement innerhalb eines Muttergehäuses mit einer durchgehenden koaxialen Öffnung. Das Halteelement ist zweischenklig mit relativ zueinander federnden Halteabschnitten ausgeführt und die Öffnung im Muttergehäuse ist als ein, sich radial verjüngender Innenkonus zur Aufnahme des Halteelements ausgebildet.

### Stand der Technik

Eine Mutter weist allgemein ein, in den äusseren Gewindegang eines Bolzens formschlüssig eingreifendes, radial inneres Eingriffsmittel auf, das als alleinigen Bewegungsfreiheitsgrad der auf dem Bolzen positionierten Mutter eine Schraubbewegung längs des Gewindegangs zulässt. Über Haftreibung des Gewindeganges mit dem Eingriffsmittel der axial verspannten Mutter wird diese fixiert.

Es sind sogenannte Schnellmontagemuttern bekannt, die einen, zwei federnde Schenkel umfassenden Drahtbügel aufweisen. Nach der DE 197 37 262 A1 weist eine, in C-förmige Profile montierbare Fassadenbefestigungsvorrichtung einen Drahtbügel mit zwei federnden Schenkeln auf, die kraftschlüssig in langgestreckte hinterschnittene Öffnungen eines axialen Tragelements einschnappt und formschlüssig in diese eingreift. Eine derartige, kraftschlüssig einschnappende Befestigung ist für Gewindegänge mit schrägen Flanken ungeeignet.

Nach der EP 0 084 280 A1 greift ein, als Drahtmutter ausgebildeter zweischenklig federnder Drahtbügel mit beiden radialen Schenkeln spulenartig in die Gewindegänge eines Bolzens ein. Nach der US 3,880,041 A beinhaltet ein, als Mutter ausgebildetes federndes Befestigungselement im hohlen Inneren einen koaxial spulenförmig gewickelten Drahtbügel, der in die Gewindegänge eingreift. Diese Muttern ermöglichen keine schraubbewegungsfreie axiale Positionierung.

Nach der DE 43 07 645 A1 greift der Drahtbügel einer Schnellmontagemutter nur teilweise in die Gewindegänge ein, wodurch die Schnellmontagemutter durch axialen Druck axial positioniert werden kann. Nach der DE 198 31 001 A1 ist eine Schnellmontagemutter mit einem koaxial spulenförmig gewickelten Drahtbügel im Inneren eines Muttergehäuses als selbstarretierende Flügelmutter ausgebildet, die eine schraubbewegungsfreie axiale Positionierung ermöglicht und durch eine Schraubbewegung fixiert sowie durch ein Lösemoment längs des Drahtes entarretiert werden kann. Der nur kraftschlüssig erfolgende Eingriff in die Gewindegänge ermöglicht keine lastbeständige Fixierung der Schnellmontagemutter.

Um Rohrleitungen in Installationsschienen zu befestigen, werden als Teil eines Befestigungssystems spezielle, den Installationsschienen zugeordnete, Schienenmuttern verwendet, die mit einem metrischen oder zölligen Gewinde versehen sind. Eine Gewindestange dient hierbei als Verbindungselement zwischen der Rohrschelle und der Schienenmutter sowie zur Höhenjustierung. Die als Meterware vorliegenden Gewindestangen werden zur Montage auf die benötigte Länge abgelängt, beispielsweise geschnitten, wodurch sich Schnittgraten ausbilden, die vor Einschrauben in eine Schienenmutter über ein Anfasen entfernt werden müssen. Das Anfasen und die Höhenjustierung sind sehr zeitintensiv.

Nach der DE 44 03 974 A1 sind Schnellmontagemuttern bekannt, die ohne Schraubbewegung axial der Gewindestange positioniert werden können. Dazu sind die als Gewindesektoren ausgeführten, in das Gewinde der Gewindestange formschlüssig eingreifenden, Eingriffsmittel der Schnellmontagemutter axial federnd ausschwenkbar. Nach einer Schraubbewegung zur Fixierung der Schnellmontagemutter greifen die eingeschwenkten, an einem Anschlag fixierten Eingriffsmittel formschlüssig in das Gewinde der Gewindestange ein. Nach der DE 100 52 445 A1 weist eine Schnellmontagemutter einen, mit relativ zueinander federnden Schenkeln ausgeführten Drahtbügel auf, der innerhalb einer koaxialen, einen radial verjüngenden Innenkonus aufweisenden Öffnung teilweise anlegbar ist. Bei diesen Schienenmuttem ist der Drahtbügel innerhalb des Muttergehäuses derart verschieblich, dass der Eingriff des Drahtbügels an der Gewindestange nicht immer einwandfrei gewährleistet ist.

### Darstellung der Erfindung

Der vorliegenden Erfindung liegt die Aufgabe zugrunde, eine Schnellmontagemutter zu schaffen, die formschlüssig einen Gewindebolzen fixiert und eine sichere Verbindung gewährleistet.

Die Aufgabe ist durch die Merkmale des Anspruchs 1 gelöst. Gemäss der Erfindung umfasst eine Schnellmontagemutter, die zumindest teilweise drehbewegungsfrei axial zu einem Gewindebolzen beweglich ist, ein, teilweise in zumindest einen Gewindegang eingreifendes, federndes Halteelement innerhalb eines Muttergehäuses mit einer durchgehenden koaxialen Öffnung. Das Halteelement ist zweischenklig mit relativ zueinander federnden Halteabschnitten ausgeführt und die Öffnung im Muttergehäuse ist als ein, sich radial verjüngender Innenkonus zur Aufnahme des Halteelements ausgebildet. Die Halteabschnitte des Halteelements weisen zumindest einen flächigen, konischen Wandabschnitt auf, der an der Wandung der Öffnung anlegbar ist.

Das Halteelement bildet mit den flächigen Wandabschnitten im Wesentlichen einen Aussenkonus aus, der nach der Fixierung der Schnellmontagemutter an der Wandung der Öffnung des Muttergehäuses anliegt. Über die Schraubbewegung ist das Halteelement teilweise axial in den Innenkonus der Öffnung verschiebbar. Durch den Innenkonus der Öffnung wird ein äusserer Zwang auf das Halteelement ausgeübt, so dass sich mit dem in den Gewindegang des Gewindebolzens eingreifenden Halteelement eine schraubenartig formschlüssige Befestigung der Schnellmontagemutter ergibt. Der Innenkonus der Öffnung gewährleistet eine Führung des mit den flächigen Wandabschnitten versehenen Halteelements, womit ein Verkanten oder eine ungenügende Ausrichtung des Halteelements in der Öffnung im Muttergehäuse verhindert ist. Zudem ist das Halteelement bis zur Anlage an dem Innenkonus der Öffnung begrenzt federnd radial aufweitbar, wenn beispielsweise der Gewindebolzen durch dieses hindurchgesteckt wird.

Vorzugsweise wird die Schnellmontagemutter zur Fixierung einer Gewindestange an einer C-förmigen Montageschiene verwendet. Die Grundform der Schnellmontagemutter weist für eine solche Verwendung eine Breite auf, die geringfügig kleiner als die Öffnung der Montageschiene ist, wodurch die Schnellmontagemutter durch die Öffnung in die Montageschiene eingeführt werden kann. Die Länge der Schnellmontagemutter beträgt etwas weniger als das Innenmass der Montageschiene, wodurch die quer zur Längsachse der Montageschiene orientierte Schnellmontagemutter axial formschlüssig lagerbar und längs der Montageschiene frei beweglich ist. Die Schnellmontagemutter kann zwei diagonal gegenüberliegende axiale Kanten aufweisen, die entsprechend des in die Montageschiene einschreibbaren Kreises mit einem Durchmesser abgerundet sind, wodurch die längs der Schienenachse eingeführte Schnellmontagemutter z. B. nur rechtsdrehend in die Montageschiene eingedreht werden kann. Des Weiteren ist die Schnellmontagemutter im Wesentlichen prismatisch ausgebildet.

Dabei können zwei Schnellmontagemuttern ein Befestigungssystem ausbilden, wobei eine erste als Schienenmutter ausgebildete Schnellmontagemutter fest mit einem Gewindebolzen verbunden in die Montageschiene zum Hintergreifen von in der Montageschiene vorgesehenen Haltevorsprüngen eingeführt wird. Die zweite Schnellmontagemutter beaufschlagt stimaussenseitig die, die Montageöffnung begrenzenden freien Ränder der Montageschiene. Mittels des Gewindebolzens werden die beiden Schnellmontagemuttern drehschraubbar verbunden. Die zweite Schnellmontagemutter ist als Kontermutter ausgeführt und über Entarretierungsmittel wieder lösbar.

Vorzugsweise sind die Halteabschnitte des Halteelements vollständig mit der Kontaktfläche am Innenkonus der Öffnung in Anlage bringbar. Damit ergibt sich ein, gegenüber einer teilweisen Anlage der Halteabschnitte, erhöhter äusserer Zwang auf das Halteelement und eine verbesserte Gewährleistung der formschlüssigen Befestigung der Schnellmontagemutter. Das Halteelement wird in dieser Ausführungsform beim Montagevorgang des Gewindebolzens derart ausgerichtet, dass ein einwandfreier Eingriff zwischen dem Halteelement und dem Gewindebolzen gegeben ist. Ein Verkippen oder Verkanten des Halteelements innerhalb des Muttergehäuses ist ausgeschlossen.

Bevorzugt bilden die Halteabschnitte des Halteelements innerhalb der Radialebene des Gewindebolzens jeweils einen kreisbogenförmig geformten Mittelteil aus, der teilweise längs der Gewindegänge des Gewindebolzens in Eingriff bringbar ist. Die kreisbogenförmigen Mittelteile bilden das Gewinde aus, das in die Gewindegänge des Gewindebolzens eingreifen kann.

Vorteilhafterweise ist der kreisbogenförmig geformte Mittelteil über eine Kröpfung axial versetzt. Bevorzugt weisen die beiden Schenkel des Halteelements jeweils eine Neigung auf, die der Steigung der Gewindegänge des Gewindebolzens entspricht, um eine formschlüssige Verbindung zwischen der Aussenkontur des Gewindebolzens und dem Halteelement sicherzustellen.

Vorzugsweise ist das Halteelement über zumindest eine Lagerstelle innerhalb des Muttergehäuses axial begrenzt beweglich gelagert. Diese Lagerstellen gewährleisten eine Begrenzung der axialen Verschiebung des Halteelements während dem Setzvorgang oder Verspannen der Schnellmontagemutter innerhalb des Muttergehäuses. Ist das Muttergehäuse, in Setzrichtung der Schnellmontagemutter oder in der Gegenrichtung dazu, offen ausgebildet, kann in beide Richtungen jeweils eine Lagerstelle zur Begrenzung der axialen Verschiebung des Halteelements vorgesehen werden. Dabei sind die relativ zueinander beweglichen Halteabschnitte des Halteelements bevorzugt über Einrastmittel miteinander verbunden, die weiter zusätzlich eine Führung längs des, im Muttergehäuse einbettbaren Halteelements ausbilden.

Bevorzugt umfasst das Muttergehäuse eine Deckschale, an der optional ein radial nach innen gerichteter Keil ausgebildet ist, der zwischen die Enden der Halteabschnitte des Halteelements einführbar ist. Der Keil in der Deckschale ist als Entarretierungsmittel ausgebildet, der in einer ersten Position relativ zu der Deckschale zwischen die freien Enden der Schenkel des Drahtbügels, diese entgegen ihrer Vorspannung spreizend, einführbar ist, wodurch die Schnellmontagemutter schraubbewegungsfrei axial positionierbar ist. Durch die Betätigung des Keils ist die Schnellmontagemutter sowohl fixierbar als auch lösbar.

Vorteilhafterweise ist längs des Halteelements an den Halteabschnitten jeweils ein angeordneter Kragarm vorgesehen, wobei die Kragarme sich gegenüberliegend, beziehungsweise gegenständig zueinander angeordnet sind. An der Deckschale sind beispielsweise zwei gegenständig angeordnete Lagerbolzen ausgebildet, die, die auskragenden, axial federnden Kragarme seitlich halten. Durch Betätigung eines, vorteilhaft durch gleichzeitige Betätigung beider, Kragarme ist das somit axial verspannte Halteelement aus der Aufnahme heraus begrenzt axial versetzbar, womit der Eingriff zwischen dem Gewindebolzen und dem Halteelement gelöst ist. Werden die Kragarme entlastet, rastet das Halteelement an dem Gewinde am Gewindebolzen erneut ein. Ist die Schnellmontagemutter mit einer Deckschale versehen, weist diese bevorzugt eine Öffnung oder Ausnehmung zum Ergreifen und Betätigen der Kragarme des Halteelements auf.

Vorzugsweise ist das Muttergehäuse, die Deckschale und/oder das Halteelement aus einem Blech in einem Stanz-/Biegeverfahren gefertigt. Des Weiteren können die einzelnen Teile aus einem geeigneten Kunststoff gefertigt sein. Um besondere Anforderungen an die Schnellmontagemutter erfüllen zu können, ist auch die Kombination verschiedener Werkstoffe für die Fertigung der Schnellmontagemutter verwendbar. Zur Gewährleistung einer hohen Sicherheit der Befestigung oder bei einer Verwendung der Schnellmontagemutter in einer aggressiven Atmosphäre ist zumindest das Halteelement bevorzugt aus einem rostfreien Stahl hergestellt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand mehrerer Ausführungsbeispiele näher erläutert. Es zeigen:
- Fig. 1: Eine Draufsicht auf das Muttergehäuse eines ersten Ausführungsbeispiels einer findungsgemässen Schnellmontagemutter;
- Fig. 2: einen Querschnitt entlang der Linie II-II in der Fig. 1;
- Fig. 3: einen Längsschnitt entlang der Linie III-III in der Fig. 1 und Fig. 2; und
- Fig. 4: einen Querschnitt durch ein zweites Ausführungsbeispiel einer erfindungsgemässen Schnellmontagemutter als Schienenmutter.

Grundsätzlich sind in den Figuren gleiche Teile mit den gleichen Bezugszeichen versehen.

### Wege zur Ausführung der Erfindung

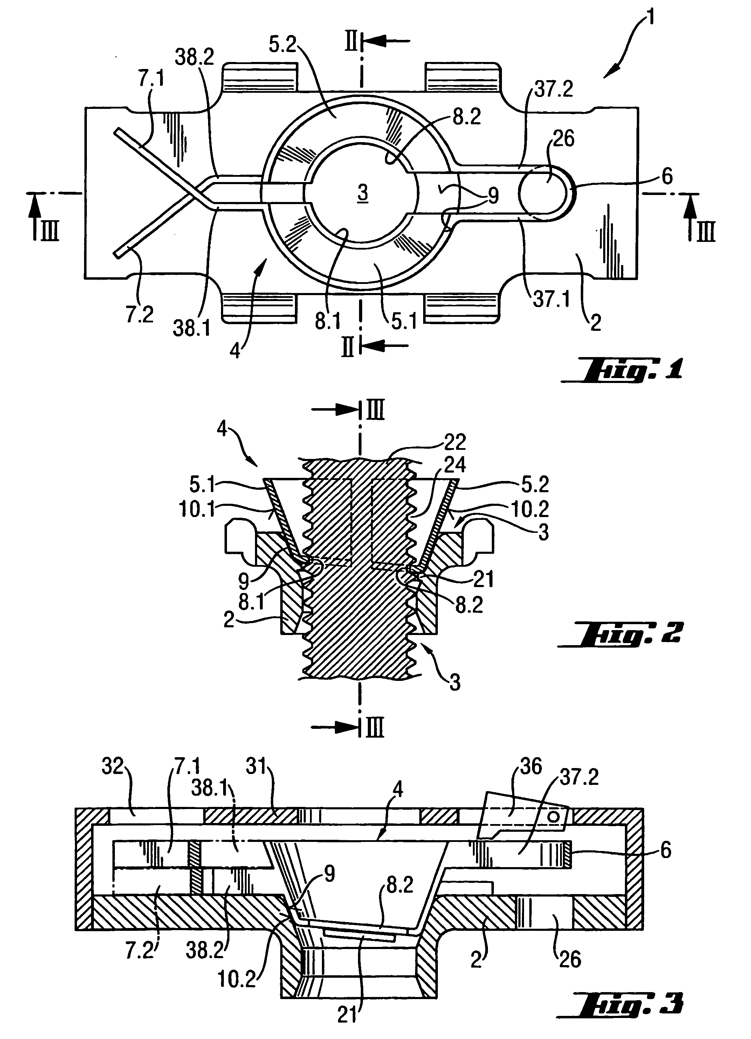

Eine Draufsicht auf das Muttergehäuse eines ersten Ausführungsbeispiels einer erfindunggemässen Schnellmontagemutter ist in Fig. 1 dargestellt. Die Schnellmontagemutter 1 weist ein Muttergehäuse 2 auf, das mit einer durchgehenden koaxialen Öffnung 3 versehen ist. Die Öffnung 3 weist einen sich verjüngenden Innenkonus 9 auf. In der Öffnung 3 ist das Halteelement 4 angeordnet. Das Halteelement 4 umfasst zwei relativ zueinander federnde Halteabschnitte 5.1 und 5.2, die an einem Ende über eine Umlenkung 6 miteinander verbunden sind, und die an deren freien Enden jeweils einen Kragarm 7.1 und 7.2 aufweisen. Die Halteabschnitte 5.1 und 5.2 bilden zusammen einen, im Wesentlichen komplementär zum Innenkonus 9 ausgebildeten Aussenkonus aus, wobei sich die Aussenseiten 10.1 und 10.2 der Halteabschnitte 5.1, bzw. 5.2 an den Innenkonus 9 anlegen können. Bei der Betätigung eines Kragarms 7.1 oder 7.2, beziehungsweise bei der gleichzeitigen Betätigung beider Kragarme 7.1 und 7.2, weiten sich die Halteabschnitte 5.1 und 5.2 relativ zueinander auf und die Schnellmontagemutter 1 kann entlang der Gewindestange 22 axial verschoben werden. Die Schnellmontagemutter 1 ist auf die Gewindestange 22 auch dann aufsetzbar, wenn die Gewindestange 22 infolge der Ablängung an deren Enden Schnittgrate aufweist. Steht die Gewindestange 22 bereits mit der Schnellmontagemutter 1 in Eingriff, kann mittels Betätigung der Kragarme 7.1 und 7.2 der Eingriff zwischen den Halteabschnitten 5.1 und 5.2 und einer zu fixierenden Gewindestange gelöst werden. Die Schnellmontagemutter 1 ist wieder axial verschiebbar. Durch Loslassen der Kragarme 7.1 und 7.2 kommen die Halteabschnitte 5.1 und 5.2 erneut mit der Gewindestange 22 in Eingriff. Durch Drehen der Schneilmontagemutter 1 und/oder der Gewindestange 22 wird die Schnellmontagemutter 1 erneut verspannt.

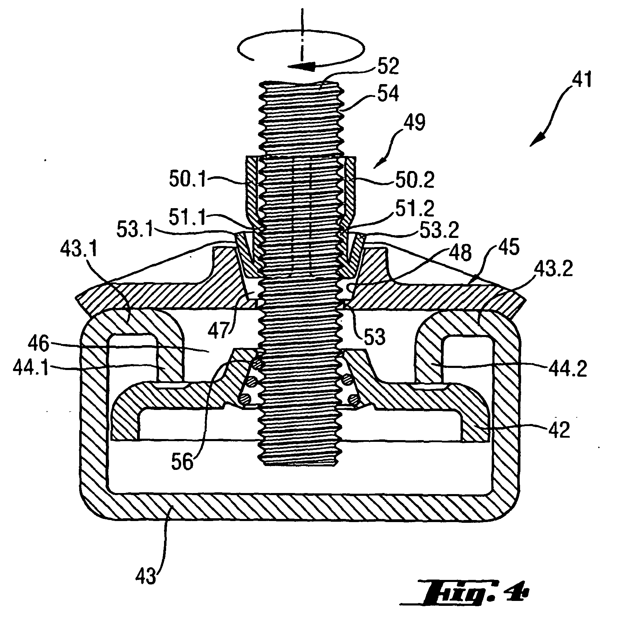

Die Halteabschnitte 5.1 und 5.2 weisen jeweils einen kreisbogenförmig geformten Mittelteil 8.1, bzw. 8.2 auf. Die Mittelteile 8.1 und 8.2 sind über eine Kröpfung radial nach innen versetzt und in der Steigung der Gewindegänge 24 der Gewindestange 22 geneigt, um einen einwandfreien Eingriff längs der Gewindegänge 24 zu gewährleisten. In Fig. 2 ist ein Querschnitt entlang der Linie II-II in der Fig. 1 dargestellt. Die, den Innenkonus 9 aufweisende Öffnung 3 weist eine, in der Öffnung radial umlaufende Lagemocke 21 auf, die eine axiale Bewegung des Halteelements 4 in der Öffnung 3 in Setzungsrichtung der Schnellmontagemutter 1 begrenzt.

In Fig. 3 ist ein Längsschnitt entlang der Linie III-III in der Fig. 1 gezeigt. In dem Muttergehäuse 2 ist eine Öffnung 26 vorgesehen, durch die ein Führungsstift eingesetzt werden kann, der das Halteelement 4 im Bereich der Umlenkung 6 des Halteelements 4 gegen eine Verschiebung radial zur Setzrichtung verhindert.

Die Schnellmontagemutter 1 kann optional eine Deckschale 31 umfassen, die mit dem Muttergehäuse 2 verbunden ist und das Halteelement 4 zumindest teilweise abdeckt. Zur Betätigung der Kragarme 7.1 und 7.2 des Halteelements 4 kann in der Deckschale 31 eine Greiföffnung 32 vorgesehen sein.

Optional dazu kann die Deckschale 31 das Muttergehäuse 2 im Wesentlichen vollständig abdecken. An der Deckschale 31 wird ein radial nach innen gerichteter Keil 36 vorgesehen, der zwischen den Längsabschnitten 37.1 und 37.2 des Halteelements 4 bei dessen Betätigung eindringen kann und so das Halteelement 4 aufweitet. In einer solchen Ausführung kann auf die Anordnung von zwei gegenständig zueinander angeordneten Kragarmen 7.1 und 7.2 an dem Halteelement 4 verzichtet werden. An den Enden der Längsabschnitte 38.1 und 38.2 weist das Halteelement 4 beispielsweise eine Umlenkung analog der Umlenkung 6 auf.

Ein Querschnitt durch ein zweites Ausführungsbeispiel einer erfindungsgemässen Schnellmontagemutter in Verwendung als Schienenmutter ist in der Fig. 4 dargestellt. Die Schienenmutter 41 umfasst ein Hintergreifteil 42 zum Hintergreifen von, in der C-förmigen Montageschiene 43 vorgesehenen Haltevorsprüngen 44.1 und 44.2 und ein, als Anschlag ausgebildetes Muttergehäuse 45 zur stirnaussenseitigen Beaufschlagung der, die Montageöffnung 46 begrenzenden freien Ränder 43.1 und 43.2 der Montageschiene 43. Das Muttergehäuse 45 weist eine koaxiale Öffnung 47 auf, in der ein sich radial verjüngender Innenkonus 48 ausgebildet ist. Das Halteelement 49 umfasst zwei kreiszylindrisch ausgeformte Halteabschnitte 50.1 und 50.2, die zusammen eine Aufnahmehülse bilden, und die analog der Halteabschnitte 5.1 und 5.2 des Halteelements 4 miteinander verbunden sind. Die Halteabschnitte 50.1 und 50.2 sind mit Innengewindeabschnitten 51.1, bzw. 51.2 zur Aufnahme der Gewindestange 52 versehen. Am Ende in Setzungsrichtung des Halteelements 49 weisen die Halteabschnitte 50.1 und 50.2 jeweils eine Umfaltung 53.1, bzw. 53.2 auf, die jeweils einen flächigen Wandabschnitt ausbilden, der an den Innenkonus 48 des Muttergehäuses 45 anlegbar ist.

Beispielsweise wird die Gewindestange 52 mit ihren Gewindegängen 54 in den Gewindegang 56 des Hintergreifteils 42 eingedreht und das Hintergreifteil 42 wird mittels Verdrehen der Gewindestange 52 nach dem Einführen in die Montageschiene 43 unter die Haltevorsprünge 44.1 und 44.2 gedreht. Das Muttergehäuse 45 wird über die Gewindestange 52 bis zum Anschlag an die freien Ränder 43.1 und 43.2 der Montageschiene 43 geführt. Das Halteelement 49 wird anschliessend ebenfalls über die Gewindestange 52 im aufgeweiteten Zustand geführt. Mittels Verdrehen der Gewindestange 52 wird die gesamte Schienenmutter 41 an der Montageschiene 43 verspannt, wobei das Hintergreifteil 42 mit den Haltevorsprüngen 44.1 und 44.2 in einen festen Eingriff tritt. Alternativ dazu kann mittels Verspannen des Muttergehäuses 45 die Schienenmutter 41 an der Montageschiene 43 verspannt werden.

In einer weiteren möglichen Ausführung der Schienenmutter 41 ist das Hintergreifteil 42, das Muttergehäuse 45 mit dem Halteelement 49 und die Gewindestange 52 bereits werkseitig zu einer Schienenmutter 41 zusammengesetzt. Nachdem das Hintergreifteil 42 zum Hintergreifen der Haltevorsprünge 44.1 und 44.2 ausgerichtet in die Montageschiene 43 eingeführt ist, wird durch Drehen des Muttergehäuses 45 die positionierte Schienenmutter 41 an der Montageschiene 43 verspannt. Mittels des in der Öffnung 47 umlaufend angeordneten Vorsprungs 53 ist das Halteelement 49 nur begrenzt axial verschieblich gelagert.

Zusammenfassend ist festzustellen, dass die erfindungsgemässe Schnellmontagemutter eine formschlüssige Fixierung eines Gewindebolzens ermöglicht, wobei eine hohe Sicherheit der erstellten Verbindung und die Gebrauchstauglichkeit der Schnellmontagemutter gewährleistet ist.

## Patentansprüche

1. Schnellmontagemutter, die zumindest teilweise drehbewegungsfrei axial zu einem Gewindebolzen (22; 52) beweglich ist, mit einem, teilweise in zumindest einen Gewindegang (24; 54) eingreifenden, federndem Halteelement (4; 49) innerhalb eines Muttergehäuses (2; 45) mit einer durchgehenden koaxialen Öffnung (3; 47), wobei das Halteelement (4; 49) zweischenklig mit relativ zueinander federnden Halteabschnitten (5.1, 5.2; 50.1, 50.2) ausgeführt ist und die Öffnung (3; 47) im Muttergehäuse (2; 45) als ein, sich radial verjüngender Innenkonus (48) zur Aufnahme des Halteelements (4; 49) ausgebildet ist, **dadurch gekennzeichnet, dass** die Halteabschnitte (5.1, 5.2; 50.1, 50.2) des Halteelements (4; 49) zumindest einen flächigen, konischen Wandabschnitt aufweisen, der an der Wandung der Öffnung (3; 47) anlegbar ist.

2. Schnellmontagemutter nach Anspruch 1, **dadurch gekennzeichnet, dass** die Halteabschnitte (5.1, 5.2; 50.1, 50.2) des Halteelements (4; 49) vollständig mit der Wandung der Öffnung (3; 47) in Anlage bringbar sind.

3. Schnellmontagemutter nach Anspruch 1 oder 2, **dadurch gekennzeichnet, dass** die Halteabschnitte (5.1, 5.2; 50.1, 50.2) des Halteelements (4; 49) innerhalb der Radialebene des Gewindebolzens (22; 52) jeweils einen kreisbogenförmig geformten Mittelteil (8.1, 8.2) ausbilden, der teilweise längs der Gewindegänge (24; 54) des Gewindebolzens (22; 52) eingreifbar ist.

4. Schnellmontagemutter nach Anspruch 3, **dadurch gekennzeichnet, dass** der kreisbogenförmig geformte Mittelteil (8.1, 8.2) über eine Kröpfung axial versetzt ist.

5. Schnellmontagemutter nach einem der Ansprüche 1 bis 4, **dadurch gekennzeichnet, dass** das Halteelement (4; 49) über zumindest eine Lagerstelle (21; 53) innerhalb des Muttergehäuses (2; 45) axial begrenzt beweglich gelagert ist.

6. Schnellmontagemutter nach einem der Ansprüche 1 bis 5, **dadurch gekennzeichnet, dass** das Muttergehäuse (2) eine Deckschale (31) umfasst, an der optional ein radial nach innen gerichteter Keil (36) ausgebildet ist, der zwischen die freien Enden (37.1, 37.2) der Halteabschnitte (5.1, 5.2) des Halteelements (4) einführbar ist.

7. Schnellmontagemutter nach einem der Ansprüche 1 bis 6, **dadurch gekennzeichnet, dass** längs des Halteelements (4; 49) an den Halteabschnitten (5.1, 5.2; 50.1, 50.2) jeweils ein angeordneter Kragarm (7.1, 7.2) vorgesehen ist, wobei die Kragarme (7.1, 7.2) sich gegenüberliegend angeordnet sind.

8. Schnellmontagemutter nach einem der Ansprüche 1 bis 7, **dadurch gekennzeichnet, dass** die Schnellmontagemutter (1; 45) und/oder das Halteelement (4; 49) aus einem Blech in einem Stanz-/Biegeverfahren gefertigt ist.

## Claims

1. Quick mounting nut which can be moved axially, at least partially without rotation, with respect to a threaded stud (22; 52), comprising a resilient retaining element (4; 49) engaging partially in at least one thread turn (24; 54) within a nut housing (2; 45) that has a coaxial through-opening (3; 47), the retaining element (4; 49) being configured with two arms having retaining sections (5.1, 5.2; 50.1, 50.2) that are resilient relative to one another and the opening (3; 47) in the nut housing (2; 45) being configured as a radially narrowing inner cone (48) for receiving the retaining element (4; 49), **characterised in that** the retaining sections (5.1, 5.2; 50.1, 50.2) of the retaining element (4; 49) include at least one planar, conical wall section which can be positioned against the wall of the opening (3; 47).

2. Quick mounting nut according to claim 1, **characterised in that** the retaining sections (5.1, 5.2; 50.1, 50.2) of the retaining element (4; 49) can be brought fully into abutment against the wall of the opening (3; 47).

3. Quick mounting nut according to claim 1 or 2, **characterised in that** the retaining sections (5.1, 5.2; 50.1, 50.2) of the retaining element (4; 49) each form within the radial plane of the threaded stud (22; 52) an arcuate centre portion (8.1, 8.2) which is partially engageable along the thread turns (24; 54) of the threaded stud (22; 52).

4. Quick mounting nut according to claim 3, **characterised in that** the arcuate centre portion (8.1, 8.2) is offset axially via a cranked portion.

5. Quick mounting nut according to any one of claims 1 to 4, **characterised in that** the retaining element (4; 49) is journalled with limited axial movement via at least one bearing site (21; 53) within the nut housing (2; 45).

6. Quick mounting nut according to any one of claims 1 to 5, **characterised in that** the nut housing (2) includes a cap (31) on which is optionally mounted a radially inwardly directed key (36) which is insertable between the free ends (37.1, 37.2) of the retaining sections (5.1, 5.2) of the retaining element (4).

7. Quick mounting nut according to any one of claims 1 to 6, **characterised in that** a cantilever arm (7.1, 7.2) is provided on each of the retaining sections (5.1, 5.2; 50.1, 50.2) of the retaining elements (4; 49), the cantilever arms (7.1, 7.2) being arranged opposite one another.

8. Quick mounting nut according to any one of claims 1 to 7, **characterised in that** the quick mounting nut (1; 45) and/or the retaining element (4; 49) is fabricated from sheet metal in a punching/forming operation.

## Revendications

1. Écrou de montage rapide au moins partiellement mobile sans rotation axialement par rapport à un goujon fileté (22 ; 52), comprenant un élément de retenue élastique (4 ; 49) en prise partielle avec au moins un pas de vis (24 ; 54) à l'intérieur d'un manchon d'écrou (2 ; 45) pourvu d'une ouverture coaxiale traversante (3 ; 47), l'élément de retenue (4 ; 49) étant conçu avec deux branches et avec des portions de retenue élastiques l'une par rapport à l'autre (5.1, 5.2 ; 50.1, 50.2), et l'ouverture (3 ; 47) du manchon d'écrou (2 ; 45) étant conformée en cône intérieur se rétrécissant radialement (48) pour recevoir l'élément de retenue (4; 49), **caractérisé en ce que** les portions de retenue (5.1, 5.2 ; 50.1, 50.2) de l'élément de retenue (4 ; 49) comportent au moins une portion de paroi conique plane qui peut être appliquée contre la paroi de l'ouverture (3 ; 47).

2. Écrou de montage rapide selon la revendication 1, **caractérisé en ce que** les portions de retenue (5.1, 5.2 ; 50.1, 50.2) de l'élément de retenue (4 ; 49) peuvent être entièrement amenées en contact avec la paroi de l'ouverture (3 ; 47).

3. Écrou de montage rapide selon la revendication 1 ou 2, **caractérisé en ce que** les portions de retenue (5.1, 5.2 ; 50.1, 50.2) dé l'élément de retenue (4 ; 49) créent chacune, à l'intérieur du plan radial du goujon fileté (22 ; 52), une partie centrale en arc de cercle (8.1, 8.2) qui peut s'engager partiellement dans les pas de vis (24 ; 54) du goujon fileté (22 ; 52).

4. Écrou de montage rapide selon la revendication 3, **caractérisé en ce que** la partie centrale en arc de cercle (8.1, 8.2) est décalée axialement par l'intermédiaire d'une portion coudée.

5. Écrou de montage rapide selon une des revendications 1 à 4, **caractérisé en ce que** l'élément de retenue (4 ; 49) est monté avec une possibilité de déplacement axial limitée à l'intérieur du manchon d'écrou (2 ; 45) par l'intermédiaire d'au moins un point d'appui (21 ; 53).

6. Écrou de montage rapide selon une des revendications 1 à 5, **caractérisé en ce que** le manchon d'écrou (2) comprend une coque de recouvrement (31) sur laquelle est optionnellement réalisée une clavette orientée radialement vers l'intérieur (36), laquelle peut être introduite entre les extrémités libres (37.1, 37.2) des portions de retenue (5.1, 5.2) de l'élément de retenue (4).

7. Écrou de montage rapide selon une des revendications 1 à 6, **caractérisé en ce qu'**un bras en porte-à-faux (7.1, 7.2) est prévu sur chacune des portions de retenue (5.1, 5.2 ; 50.1, 50.2) le long de l'élément de retenue (4 ; 49), les bras en porte-à-faux (7.1, 7.2) étant disposés l'un en face de l'autre.

8. Écrou de montage rapide selon une des revendications 1 à 7, **caractérisé en ce que** l'écrou à serrage rapide (1 ; 45) et/ou l'élément de retenue (4 ; 49) sont réalisés en tôle par un procédé de découpage-pliage.
